# EUROPÄISCHE PATENTSCHRIFT

(11) **EP 0 661 308 B1**
(45) Veröffentlichungstag und Bekanntmachung des Hinweises auf die Patenterteilung: **02.06.1999**
(21) Anmeldenummer: 94119947.3
(22) Anmeldetag: 16.12.1994
(51) Int. Cl.: C08F 232/08, C08F 210/00, C09D 145/00, C08F 8/46

(54) **Cycloolefincopolymere und Verfahren zu ihrer Herstellung**
Cyclo-olefin copolymers and process for their preparation
Copolymères de cyclooléfines et procédé de leur préparation

(30) Priorität: 24.12.1993 DE 4344502
(43) Veröffentlichungstag der Anmeldung: 05.07.1995
(73) Patentinhaber: Ticona GmbH, 65451 Kelsterbach (DE); Mitsui Petrochemical Industries, Ltd., Tokyo (JP)
(72) Erfinder: Kreuder, Willi, Dr., D-55126 Mainz (DE); Osan, Frank, Dr., D-65779 Kelkheim (DE)

(56) Entgegenhaltungen:
- EP-A- 0 074 273
- EP-A- 0 353 720
- EP-A- 0 661 310
- US-A- 3 240 762
- DATABASE WPI Section Ch, Week 8820 Derwent Publications Ltd., London, GB; Class A, AN 88-137978 & JP-A-63 081 103 (YASUHARA YUSHI KOGY)

## Beschreibung

Die Erfindung bezieht sich auf en-funktionalisierte Cycloolefincopolymere (COC) mit einer Lösungsviskosität (eta) ≥ 0,25 dl/g und ein Verfahren zu ihrer Herstellung.

Es sind unfunktionalisierte COC bekannt (EP 156 464, EP 407 870), die keinerlei Doppelbindungen enthalten. Diese weisen eine hohe Transparenz und Härte sowie eine geringe Dichte auf. Außerdem sind sie chemisch nahezu inert und sehr wärmeformbeständig. Allerdings sind unfunktionalisierte COC nur schlecht mit anderen Stoffen, insbesondere Polymeren, mischbar und weisen schlechte Hafteigenschaften auf. Darüber hinaus sind sie nur schlecht funktionalisierbar.

Da diese Polymeren nur über eine Metallkomplex-katalysierte Polymerisation zugänglich sind, die bekanntermaßen intolerant gegen polare/reaktive Gruppen ist, ist der formal denkbare Weg zur Herstellung funktionalisierter COC über Copolymerisation von Monomeren, die reaktive Gruppen tragen, nicht möglich.

Aus EP 283 164 sind COC bekannt, die cyclische Polyene enthalten. Diese Polymere weisen keine Gelteilchen auf und sind bei 135 °C in Dekalin vollständig löslich, was darauf hindeutet, daß sie im wesentlichen linear aufgebaut und unvernetzt sind. Diese Polymeren lassen sich mit Maleinsäureanhydrid umsetzen.

Durch radikalische Copolymerisation von Ethylen mit Acrylsäure, erhält man lonomere, die unter dem Namen SURLYN™ (DuPont) vermarktet werden. Diese Copolymere weisen jedoch nur eine geringe Transparenz auf. Außerdem weisen sie eine relativ geringe Härte auf.

Weiterhin sind funktionelle Gruppen tragende Ethylen-Propylen (EP)-Copolymere bekannt, die gegebenenfalls noch ein oder mehrere Dien-Monomere enthalten können (EPDM), ("Recent Advances in the Chemical Modification of Unsaturated Polymers" in Rubber Chemistry and Technology 55, 809 (1982)). In JP 54-017,931 wird beschrieben, daß EPDM-Copolymere, die Vinylnorbornen als Dienmonomer enthalten, mit Maleinsäureanhydrid umgesetzt werden. Durch nachfolgende Reaktion mit einem Farbstoff wird eine farbige Oberflächenbeschichtung erhalten. Analog wird die Umsetzung eines EPDM, welches Ethylidennorbornen als Dienmonomer enthält, mit Sulfomaleinsäureanhydrid beschrieben (Macromolecules, 20, 258 (1987)). Diese Materialien sind jedoch Elastomere mit Glastemperaturen unterhalb Raumtemperatur.

Aus JP-A-63 081 103 ist das Reaktionsprodukt zwischen einem Kohlenwasserstoffharz und einer ethylinischen ungesättigten Carbonsäureverbindung wie Maleinsäureanhydrid bekannt. Das modifizierte Kohlenwasserstoffharz kann durch kationische Polymerisation von Terpenkohlenwasserstoffmonomeren, wie α- oder β-Pinen und Dipinen und modifiziertem Terpenharz erhalten werden, das durch Copolymerisation des ungesättigten Terpenkohlenwasserstoffs mit einem 5 bis 10 Kohlenstoffatome enthaltenden ungesättigten Kohlenwasserstoffmonomer in Gegenwart eines Friedel-Krafts-Katalysators erhalten wird.

Aus EP-A-0 074 273 ist ein Kohlenwasserstoffharz mit einem Copolymer bekannt, das im wesentlichen wenigstens einen ungesättigten geradkettigen oder cyclischen Kohlenwasserstoff mit mindestens einer vinylischen Gruppe und eine Verbindung wie 9,10-Dihydrodicyclopentadien und Derivate davon enthält. Das Kohlenwasserstoffharz kann mit Maleinsäureanhydrid gepropft werden.

Aus EP-A-0 353 720 ist ein Verfahren zum Propfen von Maleinsäureanhydrid auf ein ungesättigtes olefinisches Polymer wie Ethylen-propylen-ethyliden-norbornen-terpolymer bekannt. Die Pfropfung erfolgt in Gegenwart einer Schwermetallverbindung.

Aus US-A-3,240,762 ist ein Verfahren zum Propfen von Maleinsäureanhydrid auf ein Cyclopentadien-Homopolymer bekannt.

In EP 466 279 A2 wird beschrieben, daß Maleinsäureanhydrid durch radikalische Reaktion auf Polyolefine, die bicyclische Monomerbausteine enthalten, aufgepropft werden kann. Dieser Weg ist aus mehreren Gründen technisch uninteressant: Einerseits ist der Umgang mit radikalisch zerfallenden Verbindungen wie Peroxiden wegen ihrer Explosionsfähigkeit nicht wünschenswert und andererseits ist bekannt, daß solche Radikalreaktionen an Polyolefinen zu Nebenreaktionen neigen, die zu unkontrollierten Vernetzungen, Vergelungen und letztendlich Unbrauchbarkeit führen können. Darüberhinaus sind nur geringe Gehalte an funktionellen Gruppen erhältlich.

EP 0661310 A hat dasselbe Prioritätsdatum vom 24.12.93 wie die vorliegende Anmeldung. Das EP- Dokument beschreibt ein Cycloolefincopolymer mit einer Lösungsviskosität (eta) <0,25dl/g. Das Copolymer hat außerdem eine geringere Molmasse als das Copolymer gemäß der vorliegenden Anmeldung.

Es bestand somit die Aufgabe ein mit anderen Stoffen, insbesondere Polymeren, gut mischbares Polymer mit guten Hafteigenschaften zur Verfügung zu stellen, das gleichzeitig eine hohe Transparenz, Wärmeformbeständigkeit und Härte sowie ein chemisch inertes und hydrolysestabiles Polymerrückgrat aufweist und kontrolliert vernetzbar ist. Darüberhinaus sollten Polymere bereitgestellt werden, die über die oben genannten günstigen Eigenschaften hinaus auch praktisch unbegrenzt lagerfähig sind, insbesondere auch bei Temperaturen oberhalb Raumtemperatur.

Es wurde nun gefunden, daß diese Aufgabe durch die Bereitstellung von en-funktionalisierten COC gelöst wird, deren COC-Grundgerüst durch Polymerisation in Gegenwart bestimmter Metallocen-Katalysatoren aufgebaut wird. Die erfindungsgemäßen, en-funktionalisierten COC enthalten polymerisierte Einheiten, die über eine polymeranaloge En-Reaktion (siehe J.March, Advanced Organic Chemistry, Wiley, New York, 1985, Seite 711; auf die hiermit ausdrücklich Bezug genommen wird) eingeführte funktionelle Gruppen enthalten und unterscheiden sich von den bisher bekannten COC durch eine bessere Mischbarkeit mit anderen Stoffen, insbesondere Polymeren, verbesserte Haftungseigenschaften und leichtere Funktionalisierbarkeit, wodurch Fremdmoleküle wie z.B. Farbstoffe, Peptide, Enzyme oder Biocide an das ansonsten inerte COC gebunden werden können, und lassen sich kontrolliert vernetzen.

Darüber hinaus bezieht sich die vorliegende Erfindung auf ein Verfahren zur Herstellung von en-funktionalisierten COC, das unter technisch interessanten Bedingungen arbeitet.

Die Erfindung betrifft somit ein kontrolliert vernetzbares, en-funktionalisiertes Cycloolefincopolymer mit einer Lösungsviskosität (eta) ≥ 0,25 dl/g (gemäß DIN 51562 in Dekalin bei 60°C), gemäß Patentanspruch 1.

Die polymerisierten Einheiten B) leiten sich bevorzugt ab von cyclischen und acyclischen Polyenen, insbesondere Dienen, mit 4-20 C-Atomen, die konjugierte und/oder nicht-konjugierte Doppelbindungen enthalten. Die Doppelbindungen können endständig in einer Kette, in einem Ring (endo-cyclisch) oder exocyclisch sein.

Besonders bevorzugt sind mono-, di-, tri- und tetracyclische Diene, insbesondere nicht-konjugierte di- und tricyclische Diene sowie lineare oder verzweigte acyclische Diene, insbesondere acyclische Diene mit endständigen Doppelbindungen.

Besonders bevorzugt sind polymerisierte Einheiten B), die sich von Verbindungen der Formeln VIII, IX, X, Xl, XII und XIII ableiten 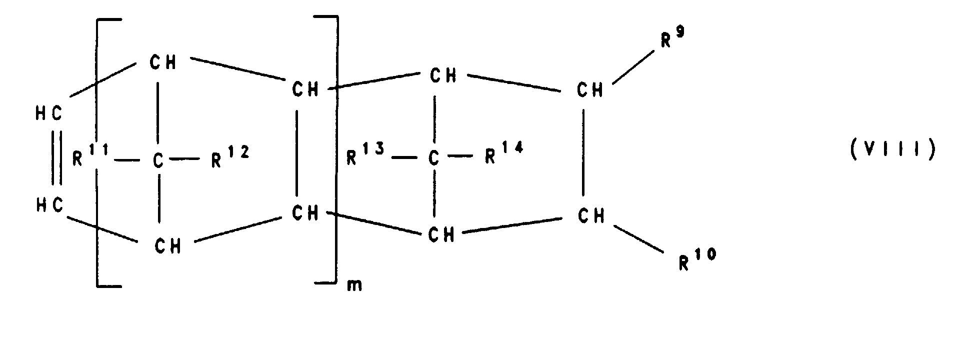 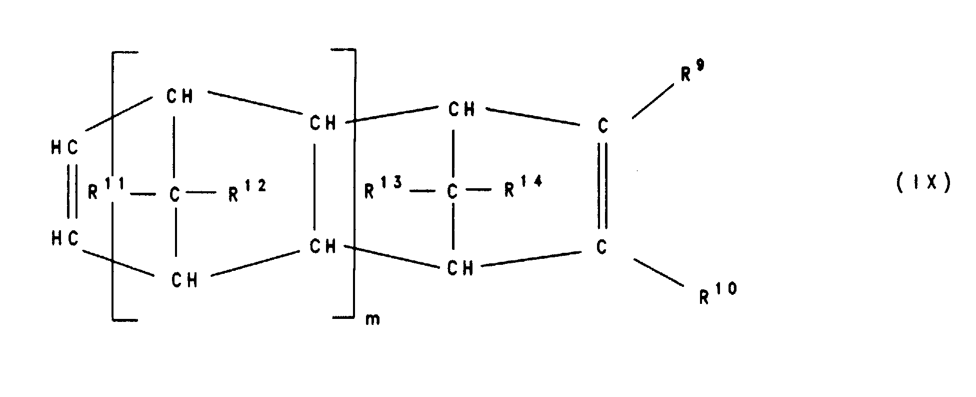 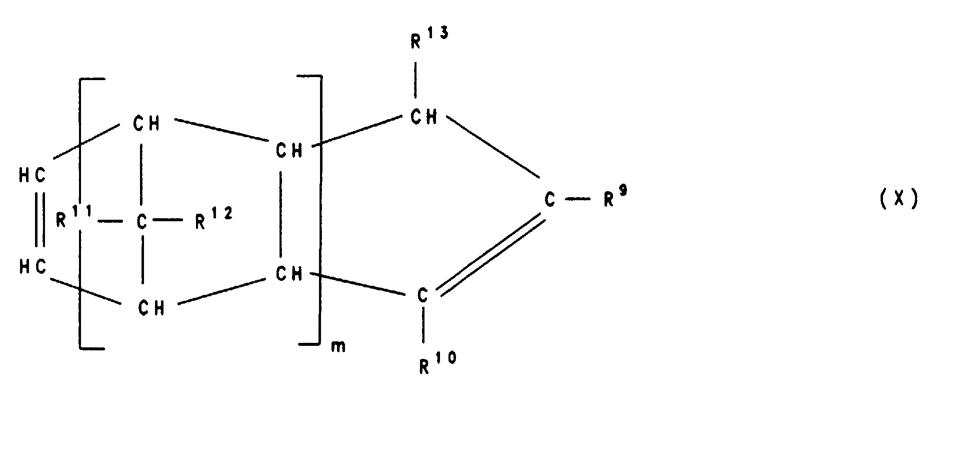 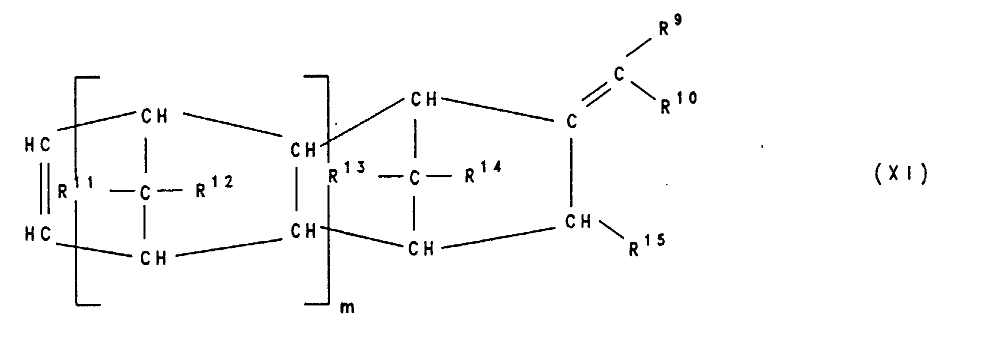 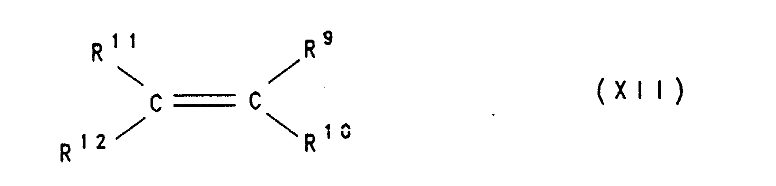 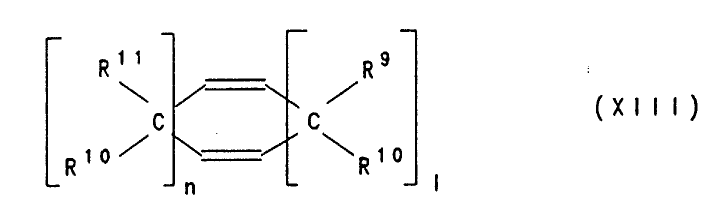 , worin R⁹, R¹⁰, R¹¹, R¹², R¹³, R¹⁴ und R¹⁵ gleich oder verschieden sind und ein Wasserstoffatom, C₁-C₈-Alkyl, C₆-C₁₄-Aryl oder C₃-C₁₅-Alkenyl bedeuten, wobei gleiche Reste in den verschiedenen Formeln VIII-XIII unterschiedliche Bedeutung haben können und mindestens einer der Reste R⁹, R¹⁰, R¹¹, R¹², R¹³ und R¹⁴ in Formel VIII sowie R⁹, R¹⁰, R¹¹ und R¹² in Formel XII ein C₃-C₁₅-Alkenylrest ist und m eine Zahl von 0 bis 10 ist und n, l eine Zahl von 0 bis 10 ist, mit der Maßgabe, daß nicht n=l=0 ist.

Beispiele für Olefine von denen sich die polymerisierten Einheiten B) ableiten sind Cyclodiene wie Norbornadien-2,5, 5-Vinylnorbornen-2, 5-Ethylidennorbornen-2, 5-Methylennorbornen-2, Dicyclopentadien, 5-Isopropylidennorbornen-2, Tricyclopentadien und 1,4,5,8-Dimethano-1,4,4a,5,8,8a-hexahydronaphtalin, Cyclopentadien, Cyclohexadien-1,4, Cyclohexadien-1,3, Cycloocta-1,5-dien, Vinylcyclohexen-1, Vinylcyclohexen-2, Vinylcyclohexen-3, Alkyl-tetrahydroindene wie 4,5,7,8-Tetrahydroindene, 4-Methyl-tetrahydroindene, 6-Methyl-tetrahydroindene oder 6-Ethyl-tetrahydroindene und acyclische Diene wie Hexadien-1,5, Hexadien-1,4, Hexadien-1,3, Decadien-1,9, Butadien und Isopren.

Es können Diels-Alder-Reaktionsprodukte, Gemische von Cyclodien und/oder Dien verwendet werden wie die Nebenprodukte der Norbornen-, bzw. Tetracyclododecenherstellung, die einen hohen Anteil Di- und Tricyclodien, bzw. Di- und Tricyclodien im Gemisch enthalten.

Generell sind acyclische Diene wie Hexadien-1,5, Hexadien-1,4, Hexadien-1,3, Decadien-1,9, Butadien und Isopren bevorzugt.

Die polymerisierten Einheiten C) leiten sich bevorzugt ab von acyclischen Mono-Olefinen, z.B. Alpha-Olefinen, mit 2 - 20 C-Atomen, insbesondere Ethylen und Propylen.

Bevorzugte polymerisierte Einheiten D) weisen elektronenziehende Gruppen auf, die einen -M-Effekt ausüben (J. March, Adv. Org. Chem., S. 238, Tab. 1, auf die hiermit ausdrücklich Bezug genommen wird), insbesondere Carbonyl und Nitril, besonders bevorzugt Carbonyl.

Die polymerisierten Einheiten D) leiten sich bevorzugt ab von Verbindungen der Formeln, 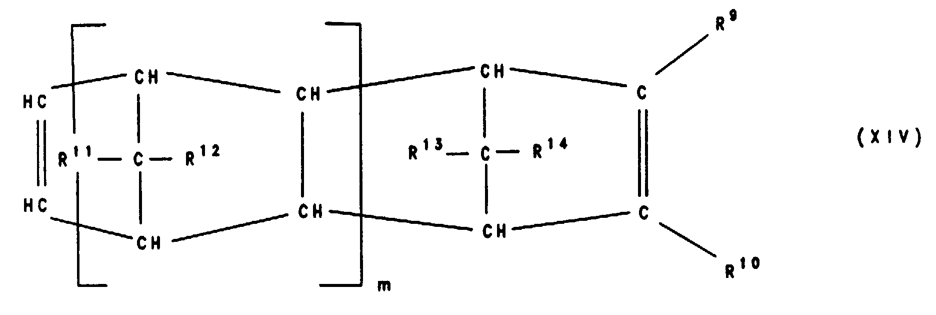 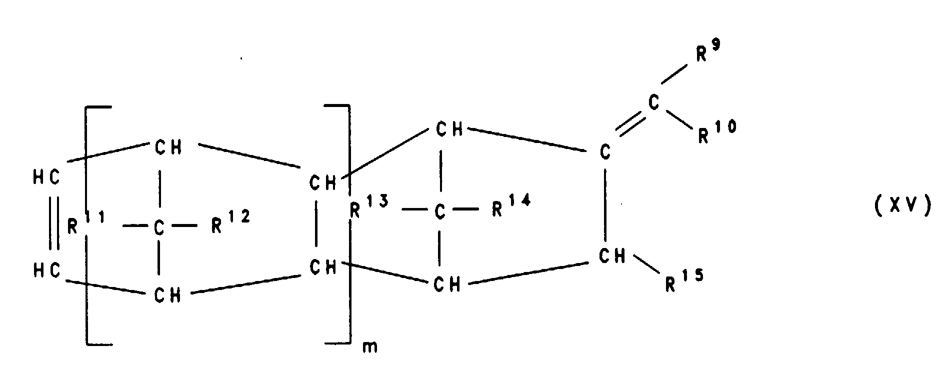 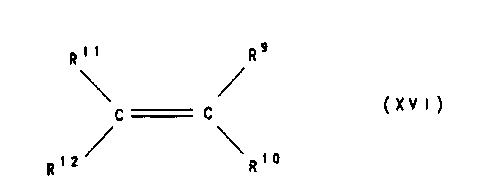 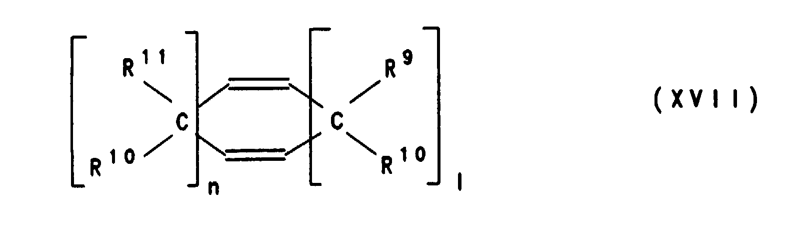 , worin die Reste R⁹, R¹⁰, R¹¹, R¹², R¹³, R¹⁴ und R¹⁵ gleich oder verschieden sind und ein Wasserstoffatom, oder einen C₁-C₂₀-Kohlenwasserstoffrest wie C₁-C₆-C₁₄-Aryl oder C₃-C₁₅-Alkenyl bedeuten, wobei gleiche Reste in den verschiedenen Formeln XIV-XVII unterschiedliche Bedeutung haben können, m eine Zahl von 0 bis 10 ist und n, l eine Zahl von 0 bis 10 ist, mit der Maßgabe, daß nicht n = l = 0 ist, und mindestens einer der Reste R⁹ und R¹⁰ die Bedeutung
2,5-Dioxotetrahydrofuran-3-yl-methyl,
2,3-Dicyanopropyl,
2-Alkyloxy carbonyl-3-cyano-propyl,
2-Aryloxy carbonyl-3-cyano-propyl,
2-Cyano-3-alkyloxy carbonyl-propyl,
2-Cyano-3-aryloxy carbonyl-propyl,
2,3-Bis(alkyloxy carbonyl)propyl,
2,3-Bis(aryloxy carbonyl)propyl,
2-Aryloxycarbonyl-3-alkyloxycarbonyl-propyl,
2-Alkyloxy carbonyl-3-aryloxycarbonyl-propyl,
2-Alkyloxy carbonyl-3-(N,N-bisalkyliminocarbonyl)-propyl,
2-Aryloxy carbonyl-3-(N-alkyl-N-aryl-imino-carbonyl)-propyl,
2-Carboxy-3-(N,N-bisalkyliminocarbonyl)-propyl,
2-Carboxy-3-(N-alkyl-N-aryl-imino-carbonyl)-propyl,
3-Alkyloxy carbonyl-2-(N,N-bisalkyliminocarbonyl)-propyl,
3-Aryloxy carbonyl-2-(N-alkyl-N-aryl-imino-carbonyl)-propyl,
3-Carboxy-2-(N,N-bisalkyliminocarbonyl)-propyl,
3-Carboxy-2-(N-alkyl-N-aryl-imino-carbonyl)-propyl,
2,5-Dioxotetrahydropyrrol-3-yl-methylen,
N-Alkyl-2,5-dioxotetrahydropyrrol-3-yl-methyl,
N-Aryl-2,5-dioxotetrahydropyrrol-3-yl-methyl,
N,N'-Bis(alkyloxycarbonyl)-2,3-diaza-propyl,
4-Sulfo-2,5-dioxotetrahydrofuran-3-yl-methyl,
4-Brom-2,5-dioxotetrahydrofuran-3-yl-methyl,
4-Chlor-2,5-dioxotetrahydrofuran-3-yl-methyl oder
3-Sulfo-2,3-bis(alkyloxy carbonyl)propyl hat bzw. das Salz einer dieser Verbindungen mit anorganischen oder organischen Basen darstellt. Salze anorganischer Basen sind z.B. Alkali-, Erdalkali-, und Zinksalze, insbesondere Na-, K-, Ca- und Mg-Salze. Bevorzugt sind Salze organischer Basen wie primärer und sekundärer aliphatischer Amine, z. B. Diethylamin, Triethylamin, Diethanolamin oder Triethanolamin.

Darüber hinaus können sich die polymerisierten Einheiten auch von Verbindungen der Formel (XVIII) ableiten 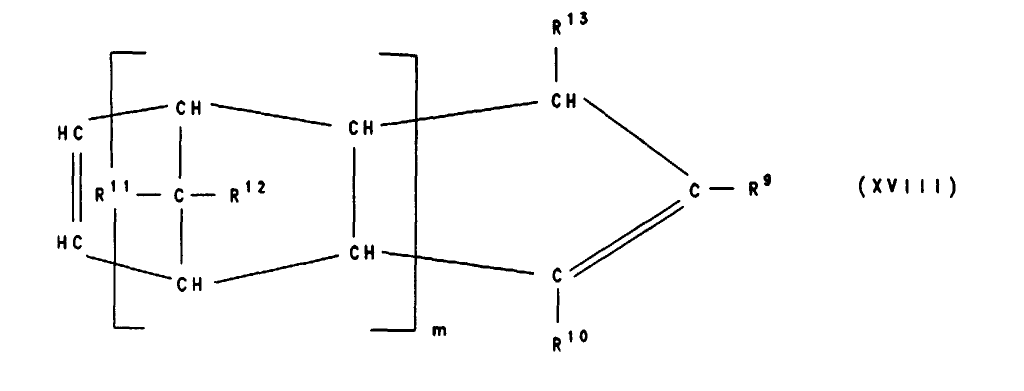 , worin die Reste R⁹, R¹⁰, R¹¹ und R¹² gleich oder verschieden sind und ein Wasserstoffatom, oder ein C₁-C₂₀-Kohlenwasserstoffrest wie C₁-C₈-Alkyl, C₆-C₁₄-Aryl oder C₃-C₁₅-Alkenyl bedeuten, und m eine Zahl von 0 bis 10 ist und R¹³ die Bedeutung
2,5-Dioxotetrahydrofuran-3-yl,
1,2-Dicyanoethyl,
1-Alkyloxy carbonyl-2-cyano-ethyl,
1-Aryloxy carbonyl-2-cyano-ethyl,
1-Cyano-2-alkyloxy carbonyl-ethyl,
1-Cyano-2-aryloxy carbonyl-ethyl,
1,2-Bis(alkyloxy carbonyl)ethyl,
1,2-Bis(aryloxy carbonyl)ethyl,
1-Aryloxycarbonyl-2-alkyloxycarbonyl-ethyl,
1-Alkyloxy carbonyl-2-aryloxycarbonyl-ethyl,
1-Alkyloxy carbonyl-2-(N,N-bisalkyliminocarbonyl)-ethyl,
1-Aryloxy carbonyl-2-(N-alkyl-N-aryl-imino-carbonyl)-ethyl,
1-Carboxy-2-(N,N-bisalkyliminocarbonyl)-ethyl,
1-Carboxy-2-(N-alkyl-N-aryl-imino-carbonyl)-ethyl,
2-Alkyloxy carbonyl-1-(N,N-bisalkyliminocarbonyl)-ethyl,
2-Aryloxy carbonyl-1-(N-alkyl-N-aryl-imino-carbonyl)-ethyl,
2-Carboxy-1-(N,N-bisalkyliminocarbonyl)-ethyl,
2-Carboxy-1-(N-alkyl-N-aryl-imino-carbonyl)-ethyl
2,5-Dioxotetrahydropyrrol-3-yl,
N-Alkyl-2,5-dioxotetrahydropyrrol-3-yl,
N-Aryl-2,5-dioxotetrahydropyrrol-3-yl,
N,N'-Bis(alkyloxycarbonyl)-1,2-diaza-ethyl,
4-Sulfo-2,5-dioxotetrahydrofuran-3-yl,
4-Brom-2,5-dioxotetrahydrofuran-3-yl,
4-Chlor-2,5-dioxotetrahydrofuran-3-yl oder
2-Sulfo-1,2-bis(alkyloxy carbonyl)ethyl hat bzw. das Salz einer dieser Verbindungen mit anorganischen oder organischen Basen darstellt. Salze anorganischer Basen sind z.B. Alkali-, Erdalkali-, und Zinksalze, insbesondere Na-, K-, Ca- und Mg-Salze. Bevorzugt sind Salze organischer Basen wie primärer und sekundärer aliphatischer Amine, z. B. Diethylamin, Triethylamin, Diethanolamin oder Triethanolamin.

Die Alkylreste in den polymerisierten Einheiten D) können linear, verzweigt oder cyclisch, gesättigt oder partiell ungesättigt, mit 1-18 C-Atomen sein. Die Arylreste in dem polymerisierten Einheiten D) können 6 - 30 C-Atome enthalten und zusätzliche Substituenten tragen, bevorzugt C₁-C₁₈-Alkylsubstituenten, die unabhängig voneinander linear, verzweigt oder cyclisch sind. Bevorzugt leiten sich die polymerisierten Einheiten D) von Verbindungsgemischen ab, deren Komponenten Alkyl- bzw. Arylreste mit unterschiedlichen C-Atom-Anzahlen aufweisen. Die Reste leiten sich ab von homologen Reihen, die technisch verfügbar sind bzw. aus biologischen Quellen ohne weitere Reinigung erhältlich sind. Eine bevorzugte Quelle ist z. B. das Rindertalg-Alkohol- bzw. Rindertalg-Amin-Gemisch, das je nach Herkunftsort, Rasse und Saison in seiner Zusammensetzung schwanken kann.

Insbesondere bevorzugt sind Cycloolefincopolymere, deren polymerisierte Einheiten B) mindestens 0,1 Gew.-%, insbesondere 20-60 Gew.-%, bezogen auf die Gesamtmasse des Cycloolefincopolymers, eines acyclischen C₄-C₂₀-Polyens, insbesondere C₄-C₂₀-Diens, enthalten.

Das erfindungsgemäße COC weist einen Anteil polymerisierter Einheiten A) (Cycloolefinanteil) auf von 0,1-99,89 Gew.-%, bevorzugt 1-99 Gew.-%, besonders bevorzugt 10-90 Gew.-%, jeweils bezogen auf die Gesamtmasse des Cycloolefincopolymers.

Der Anteil polymerisierter Einheiten B) beträgt 0,1-99,89 Gew.-%, bevorzugt 1-50 Gew.-%, besonders bevorzugt 2-30 Gew.-%, jeweils bezogen auf die Gesamtmasse des Cycloolefincopolymers.

Der Anteil polymerisierter Einheiten C) beträgt 0-80 Gew.-%, bevorzugt 1-60 Gew.-%, besonders bevorzugt 2-50 Gew.-%, jeweils bezogen auf die Gesamtmasse des Cycloolefincopolymers.

Der Anteil polymerisierter Einheiten D), welche mindestens zwei elektronenziehende Gruppen aufweisen beträgt 0,01-50 Gew.-%, bevorzugt 0,05-20 Gew.-%, besonders bevorzugt 0,1-10 Gew.-%, jeweils bezogen auf die Gesamtmasse des Cycloolefincopolymeren.

Die erfindungsgemäßen COC weisen eine Lösungsviskosität (eta) > = 0,25 dl/g (gemessen in Decalin, bei 60⁰C, gemäß DIN 51562) auf, bevorzugt 0,25 bis 1,5 dl/g. Das Molekulargewicht M_{w} ist bevorzugt > 13.000 g/mol und die Polydispersität M_{w}/Mₙ ist bevorzugt < 4. Die Glastemperatur beträgt bevorzugt -20 - 200⁰C, besonders bevorzugt 0 - 200⁰C. Die Jodzahl (JZ) beträgt 0,5 - 200, bevorzugt 0,5 - 50.

Die erfindungsgemäßen COC weisen eine gute Mischbarkeit mit anderen Stoffen auf. Die Mischungspartner können niedermolekular oder hochmolekular sein. Ein Beispiel für niedermolekulare Mischungspartner ist die Verwendung der erfindungsgemäßen Polymere als Öladditiv. Beispiel für hochmolekulare Stoffe sind Polymere, insbesondere Polyamide und Polyacrylate.
Die chemische Reaktivität der funktionellen Gruppe läßt sich technisch nutzen, indem z.B. Farbstoffe oder Biocide an das ansonsten inerte Polyolefin fest gebunden werden können.

Die erfindungsgemäßen COC zeigen sehr gute Hafteigenschaften und eignen sich als Beschichungsmittel, was von großer technischer Bedeutung, z.B. bei der Laminierung von Kunststoffolien ist. Darüber hinaus können sie als Additive in Wachsen, Klebstoffen, Haftvermittlern, Weichmacher, Schlichten, Appreturen oder als Härter, z.B. in reaktiven Reparaturmassen verwendet werden.

Die Erfindung betrifft außerdem ein Verfahren zur Herstellung von kontrolliert vernetzbarem, en-funktionalisierten COC mit einer Lösungsviskosität (eta) ≥ 0,25 dl/g, dadurch gekennzeichnet, daß doppelbindungshaltiges COC mit mindestens einem Enophil zur Reaktion gebracht wird.

Als Enophile dienen bevorzugt a,β-ungesättigte Carbonsäuren oder α,β-ungesättigte Carbonsäurederivate wie Maleinsäureanhydrid, Maleinsäureestern (z.B. wie Di-n-butylmaleat und Bisoctadecylmaleat), Maleinimide, die auch substituiert sein können (z.B. wie N-Phenylmaleimid), Brommaleinsäureanhydrid, Sulfomaleinsäureanhyrid oder Azodicarbonsäurediethylester.

Das Molverhältnis Enophil zu Doppelbindungen am Polymeren ist unkritisch. Ein Unterschuß kann geeignet sein, wenn angestrebt wird, möglichst wenig ungebundenes Enophil am Ende der Reaktion vorliegen zu haben. Um möglichst hohe Anteile an polymergebundenem Enophil zu erzielen, hat es sich jedoch als vorteilhaft erwiesen einen Überschuß des Enophils relativ zur Doppelbindung einzusetzen, wobei die Obergrenze durch Wirtschaftlichsüberlegungen und eventuell auftretende Probleme beim Abtrennen der Überschußkomponente gegeben ist. Bevorzugt werden die Komponenten im Molverhältnis 2-8, besonders bevorzugt im Molverhältnis 3-5 zur Reaktion gebracht.

Durch Lewis-Säuren kann die En-Reaktion katalysiert werden.

Die Reaktion kann heterogen oder homogen ausgeführt werden. Heterogen bedeutet, daß das niedermolekulare Enophil als Dampf auf die Polymerpartikel, z.B. in der Wirbelschicht, einwirkt, oder auch, daß sich die Polymerpartikel suspendiert in einer Lösung des Enophils befinden.

Homogene Reaktionsführung umfaßt die Durchführung in Schmelze oder Lösung. In einer bevorzugten Ausführungsform wird die Reaktion homogen in einem Lösungsmittel für COC durchgeführt, das zugleich auch das Enophil löst. Hierbei eignen sich aromatische Lösungsmittel wie Benzol, Toluol, Xylole, Chlorbenzol und andere chlorierte organische Lösungsmittel wie Chloroform oder Tetrachlorethylen. Auch Lösungsmittelgemische können oft vorteilhaft sein. Die Reaktion kann vorteilhaft unter Druck ausgeführt werden. Besonders geeignet sind Hochsieder wie cis/trans-Decalin und Isomere des Dichlorbenzol. In einer bevorzugten Ausführungsform wird die Reaktion bei Temperaturen zwischen 150 °C und 220 °C in 1,2-Dichlorbenzol oder Decalin durchgeführt. In einer besonders bevorzugten Ausführungsform wird am Siedepunkt der Lösung drucklos gearbeitet.

Die Konzentration der Lösung wird durch Rührbarkeit, d.h. die Viskosität nach oben beschränkt. Die untere Konzentrationsgrenze ergibt sich aus Wirtschaftlichkeitserwägungen und den eventuell durch das Lösungsmittel eingeschleppten Verunreinigungen, die erfahrungsgemäß vermehrt zu unerwünschten Nebenreaktionen führen können. Als geeignet hat sich der Konzentrationsbereich von 2-50 % (w/v = Polymer/Lösungsmittel) erwiesen. Bevorzugt ist der Bereich von 4-30 %, besonders bevorzugt von 5-20 %.

Bei der Herstellung des erfindungsgemäßen COC kann der Zusatz eines geeigneten, unter den gewählten Bedingungen nicht chemisch reagierenden Inhibitors vorteilhaft sein. Als geeignet haben sich erwiesen z.B. Phenothiazin, Nitroaromaten, wie Nitrobenzol und Dinitrobenzol, 2-Mercaptobenzothiazol,2-Mercaptoimidazol und Diphenylguanidin (US 4,080,493). Bevorzugt wird das erfindungsgemäße COC in Abwesenheit von Radikalstartern, z.B. Peroxoverbindungen oder Azoisobutyronitril, hergestellt.

Die erhaltene Polymerlösung kann direkt weiterverwendet werden. Soll das Polymere als solches isoliert werden, kann dies nach den bekannten Verfahren vom Lösungsmittel befreit werden:
1. Abstrippen des Lösungsmittels, z.B. durch Wasserdampfdestillation,
2. Verdampfen des Lösungsmittels, z.B. durch Sprühtrocknung oder Eindicken im Fallfilmverdampfer, der ggf. im Vakuum betrieben wird, und bevorzugt durch
3. Ausfällung in einem mit dem Polymerlösungmittel mischbaren Nichtlösungsmittel, z.B. Methanol oder besonders bevorzugt Aceton.

Methode 3 ist bevorzugt wenn aus der Reaktionsmischung das im Überschuß vorhandene Enophil, z.B. Maleinsäureanhydrid, weitestgehend entfernt werden soll.

Durch Waschen mit Lösungsmitteln, die das Polymere nicht auflösen, können Fremdstoffe, z.B. Nebenprodukte leicht entfernt werden. Die Trocknung kann bei Normaldruck oder vermindertem Druck, bevorzugt mit Inertgas-Überlagerung erfolgen, wobei die Temperatur unterhalb T_{g} gewählt werden muß, um Sintern zu vermeiden. Bevorzugt ist die Trocknung im Stickstoffstrom.

Die in dem erfindungsgemäßen Verfahren eingesetzten doppelbindungshaltigen Cycloolefincopolymere werden hergestellt bei Temperaturen von -78°-200° C und einem Druck von 0,01-64 bar, in Gegenwart eines Katalysators, enthaltend ein Aluminoxan und mindestens ein Metallocen, bevorzugt ein Metallocen, der Formel (1) oder (II) 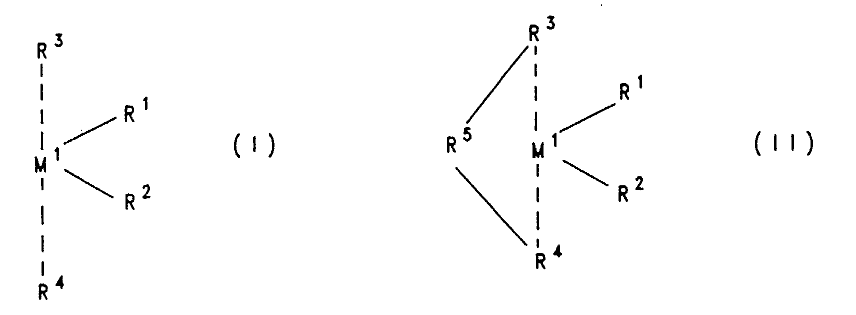 , worin M¹ ein Metall aus der Gruppe Titan, Zirkon, Hafnium, Vanadium, Niob und Tantal ist, R¹ und R² gleich oder verschieden sind und ein Wasserstoffatom, ein Halogenatom oder eine C₁-C₂₀-Kohlenwasserstoffgruppe wie eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ gleich oder verschieden sind und einen ein- oder mehrkernigen Kohlenwasserstoffrest, welcher mit dem Zentralatom eine Sandwichstruktur bilden kann, bedeuten,
R⁵ 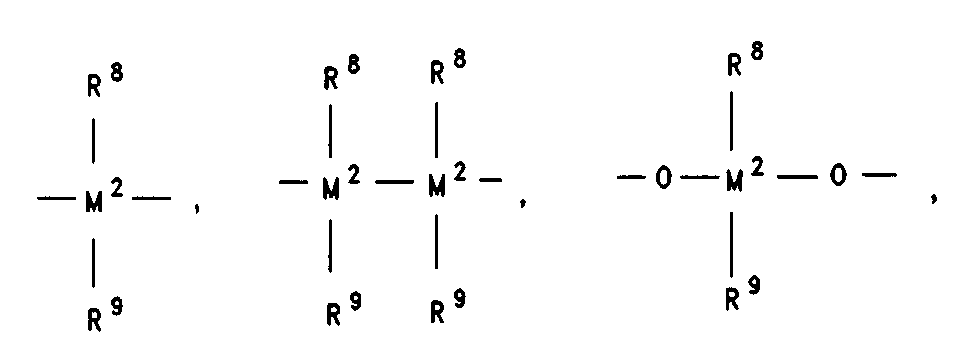 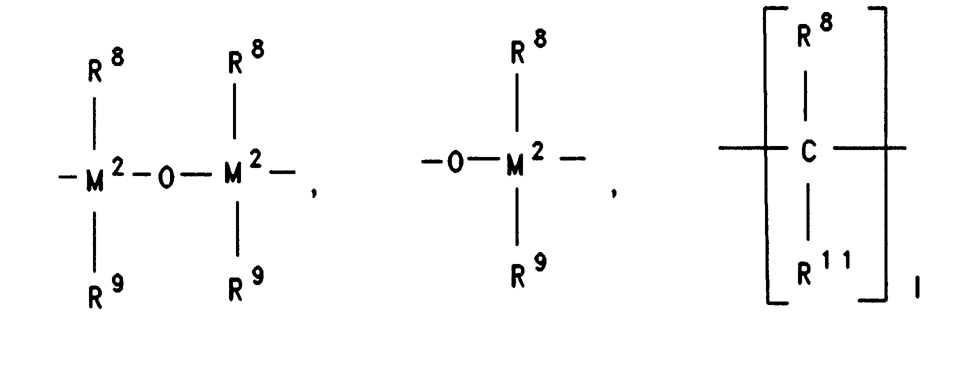 , =BR⁸, =AlR⁸, -Ge-, -Sn-, -O-, -S-, =S=O, =SO₂, =NR⁸, =PR⁸ oder P(O)R⁸ bedeutet, wobei l = 1, 2 oder 3 ist,
R⁸ und R⁹ gleich oder verschieden sind und ein Wasserstoffatom, ein Halogenatom, oder eine C₁-C₂₀-Kohlenwasserstoffgruppe wie eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁸ und R⁹ jeweils zusammen mit den sie verbindenden Atomen ein Ringsystem bilden,
R¹¹ ein Halogenatom, oder eine C₁-C₂₀-Kohlenwasserstoffgruppe wie eine C₁-C₁₀-Alkylgruppe, eine C₆-C₁₀-Arylgruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁸ und R¹¹ jeweils zusammen mit den sie verbindenden Atomen ein Ringsystem bilden, und M² Silizium, Germanium oder Zinn ist.

Ein- oder mehrkernige Kohlenwasserstoffreste sind bevorzugt unsubstituierte oder substituierte Cyclopentadienylgruppen wie Cyclopentadienyl, Methylcyclopentadienyl, Indenyl, 2-Methyl-indenyl, 4,5-Benzoindenyl, 2-Methyl-4,5-Benzoindenyl, Fluorenyl oder 4,7-tert.-Butylfluorenyl.
Bevorzugt werden Metallocene der Formeln (I) und (II) eingesetzt, worin M¹ Zirkon ist,
R¹ und R² gleich sind und ein Halogenatom, insbesondere Chlor, oder eine C₁-C₁₀-Alkylgruppe, insbesondere Methyl sind,
R³ und R⁴ gleich oder verschieden sind und Cyclopentadienyl, Indenyl oder Fluorenyl sind, die mit C₁-C₂₀-Kohlenwasserstoffresten substituiert sein können, 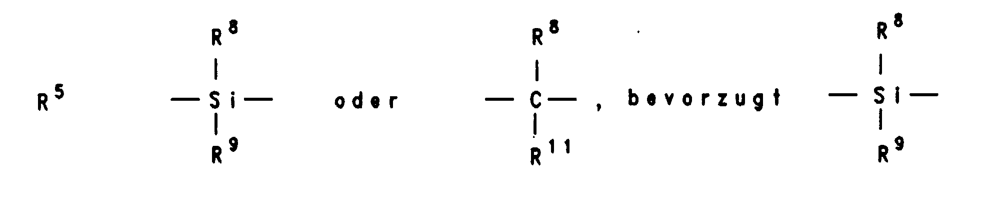 ist, worin R⁸, R⁹ und R¹¹ gleich oder verschieden sind und eine C₁-C₁₀-Alkylgruppe, insbesondere Methyl, oder eine C₆-C₁₀-Arylgruppe, insbesondere Phenyl sind.

### Beispiele:

Es bedeuten:
eta = Lösungsviskosität (Decalin, 60°C, gemäß DIN 51562) in dl/g,
M_{w} = Molekulargewicht in g/mol,
M_{w}/Mₙ = Polydispersität, gemessen mit Gelpermeationschromatographie (o-Dichlorbenzol, 135°C, Polystyrolstandard),
Äquivalentgewicht (ÄG) = g Polymer/mol funktionelle Gruppe (titrimetrisch bestimmt)
JZ = Jodzahl (titrimetrisch bestimmt)

### Beispiel 1:

Ein sauberer und trockener 1,5 dm³ Polymerisationsreaktor mit Rührer wurde mit Stickstoff und dann mit Ethylen gespült und mit 0,6 dm³ einer 85 %igen Lösung von Norbornen in Toluol gefüllt. Es wurden 60 ml 5-Vinylnorbornen-2 zugegeben. Der Ethylendruck wurde auf 6 bar Überdruck eingestellt. Weiterhin wurden 180 cm³ Wasserstoff zugegeben und die Temperatur auf 70 °C eingestellt. 12 mg Diphenylmethylen(cyclopentadienyl)(9-fluorenyl)zirkondichlorid wurden in 20 cm³ einer toluolischen Methylaluminoxanlösung (10 Gew.-% Methylaluminoxan mit Molmasse 1300 g/mol nach kryoskopischer Bestimmung) gelöst und anschließend in den Reaktor dosiert. Der Ethylendruck wurde durch Nachdosieren bei 6 bar gehalten. Nach einer Stunde Polymerisationszeit wurde der Reaktorinhalt in ein Gefäß abgelassen und mit 5 cm³ Isopropanol versetzt.

Die Lösung wurde mit 10 g Celite 545 (LuV, Hamburg) und 5 cm³ Wasser versetzt und 30 min bei 60 °C gerührt. Auf dem Filtergewebe einer 2 l Drucknutsche wurde ein Filterkuchen aus 10 g Celite, suspendiert in 0,5 dm³ Toluol, aufgebaut. Die Polymerlösung wurde über die Drucknutsche filtriert, wobei ca. 1 bar Stickstoffdruck aufgebaut wurden. Die klare Lösung wurde in 5 dm³ Aceton mit Hilfe eines Dispergators (Fa. Kotthoff) eingetragen. Der Feststoff wurde durch Filtration isoliert, noch zweimal in Aceton dispergiert und anschließend bei 100 °C und reduziertem Druck (0,2 bar) 15 Stunden getrocknet. Es wurden 99 g polymerer Feststoff erhalten. Die Glastemperatur war 150 °C und eta betrug 0,3 dl/g (DIN 51562). Es wurde eine Jodzahl von 19 bestimmt.

### Beispiele 2 bis 4:

Analog Beispiel 1, jedoch ohne Zugabe von Wasserstoff, wurden verschiedene Cycloolefincopolymere hergestellt (Tabelle 1). Die Eigenschaften der Produkte sind in Tabelle 1 aufgeführt.

**Tabelle 1**

| Beispiel Nr. | Dienmonomer | Dien monomer [ml] | Metallocen | Metallocen [mg] | Ausbeute [g] | eta [dl/g] | Tg [°C] | Jodzahl |
|---|---|---|---|---|---|---|---|---|
| 2 | VNb | 60 | A | 12 | 84 | 0,68 | 156 | 15 |
| 3 | VNb | 30 | A | 12 | 106 | 1,13 | 168 | 10 |
| 4 | VNb | 30 | B | 11 | 21 | 0,88 | 161 | 9 |
| VNb -5-Vinylnorbornen-2, A = Diphenylmethylen(cyclopentadienyl)(9-fluorenyl)zirkondichlorid B = Bis(indenyl)zirkondichlorid | | | | | | | | |

### Beispiel 5:

Analog Beispiel 1 wurde in einem 75 dm³ Polymerisationsreaktor 21,4 kg Norbornen, 6 dm³ Toluol und 3 dm³ 5-Vinylnorbornen-2 vorgelegt. In 500 cm³ einer toluolischen Methylaluminoxanlösung wurden 500 mg Katalysator A gelöst. Es wurden 1,8 dm³ Wasserstoff in den Reaktor dosiert und der Ethylendruck auf 6 bar eingestellt.
Die Katalysatorlösung wurde in den Reaktor dosiert. Der Ethylendruck wurde durch Nachdosieren konstant gehalten. Während der Polymerisation wurden 1,2 dm³/h Wasserstoff nachdosiert.

Die Reaktionslösung wurde nach 1 h Polymerisationszeit in einen 150 dm³ Rührkessel abgelassen, in dem 500 g Celite und 200 ml Wasser in 50 dm³ einer hydrierten Dieselölfraktion (Exxsol, Siedebereich 100 - 120 °C von Exxon) vorgelegt wurden. Bei 60 °C wurde 30 min gerührt.

Auf dem Filtergewebe einer 120 dm³ Drucknutsche wurde ein Filterkuchen aus 500 g Celite suspendiert in 10 dm³ Exxsol aufgebaut. Die Polymerlösung wurde über die Drucknutsche filtriert. Über der Lösung wurde ein Stickstoffdruck von 2,8 bar aufgebaut.
Anschließend wurde über sieben Filterkerzen (Fluid Dynamics, Dynalloy SX 64, 5 µm 0,1 m²/Kerze) die in einem Stahlgehäuse montiert wurden, filtriert. Die Polymerlösung wurde mittels eines Dispergators (®Ultraturrax) in 500 dm³ Aceton eingerührt und dabei gefällt. Die Suspension wurde über eine 680 dm³ Rührdrucknutsche bei geöffnetem Bodenventil im Kreis gefördert. Nach Schließen des Bodenventils wurde dreimal mit 200 dm³ Aceton gewaschen. Das Produkt wurde nach der letzten Wäsche im Stickstoffstrom bei 100 °C vorgetrocknet und im Trockenschrank 24 Stunden bei 0,2 bar getrocknet. Es wurden 4,8 kg Polymer erhalten. Die Lösungsviskosität eta betrug 0,52 dl/g und die Glastemperatur 153 °C. Die Jodzahl betrug 15. Das Gewichtsmittel M_{w} betrug 38000 und das Zahlenmittel Mₙ des Molekulargewichtes betrug 13000.

### Beispiel 6:

Aus 6 g Polymer aus Beispiel 5 wurden eine Preßplatte (6 cm Durchmesser) bei 240 °C hergestellt. Die Preßplatte war transparent und farblos.

### Beispiel 7:

5,033 g des Cycloolefincopolymeren aus Beispiel 2, das 50 mol-% Ethylen-, 45 mol-% Norbornen- und 5 mol-%-Vinylnorbornen-Repetiereinheiten enthält und charakterisiert ist durch eine Lösungsviskosität (Decalin, 135 °C) von eta = 0,68 dl/g und dem durch Gelpermeationschromatographie (o-Dichlorbenzol, 135 °C) bestimmten Molekulargewicht M_{w} = 17.000 g/mol mit dem Polydispersitätskoeffizienten M_{w}/Mₙ = 2,9; JZ = 15 (→ ÄG = 1700 g/mol C = C), T_{g} = 156°C (aus DSC) wird unter Stickstoff zusammen mit 1,602 g Maleinsäureanhydrid in 25 ml 1,2-Dichlorbenzol bei Raumtemperatur gelöst. Unter Rühren wird die Lösung auf 180 °C erwärmt. Nach 8 h unter Rückfluß wird durch Eingießen in 250 ml Aceton aufgearbeitet. Das ausgefallene, farblose maleinierte Polymere wird abgesaugt und mehrmals mit Aceton gewaschen. Das erhaltene Polymere wird bei 80 °C in 150 ml Toluol, dem 1,5 ml Acetanhydrid zugesetzt wurden, gelöst und in 700 ml Aceton umgefällt. Nach Trocknung bei 60 °C im Vakuum werden 4,928 g Polymer mit einem Äquivalentgewicht von 1450 g/mol C = C (JZ = 17,5) erhalten: M_{w} = 17800 g/mol, M_{w}/Mₙ = 2,4;, eta = 0,61 dl/g. Acidimetrisch wird ein Äquivalentgewicht von 3340 g/mol Anhydrid gefunden. Diese Bestimmungsmethode wird beschrieben in: Polym. Eng. & Sci. 32, 467 (1992). Die IR-spektroskopische Anhydridbestimmung zeigte den gleichen Gehalt an gebundener Maleinsäureanhydrid von 2,9 % (w/w).

### Beispiel 8:

Beispiel 7 wurde wiederholt, jedoch wurden 3,930 g COC mit 1,523 g Maleinsäureanhydrid in einem Gemisch aus 25 ml Decalin (cis/trans-Gemisch) und 2,5 ml Nitrobenzol innerhalb 16 h bei 190 °C zur Reaktion gebracht. Es wurden 3,425 g eines maleinierten COC erhalten mit einem Äquivalentgewicht von 2700 g/mol C = C, Äquivalentgewicht von 8500 g/mol Anhydrid, eta = 0,62 dl/g.

### Beispiel 9:

Es wurde gemäß Beispiel 8 verfahren, jedoch wurden 4,8 g eines COC gemäß Beispiel 4 mit den Kenndaten eta = 0,88 dl/g, M_{w} = 11200 g/mol, D = M_{w}/Mₙ = 1,8; JZ = 10 (→ ÄG = 2500 g/mol C = C, T_{g} = 161 °C eingesetzt, das 50 mol-% Ethylen-, 47 mol-% Norbornen- und 3 mol-% 5-Vinylnorbornen-Repetiereinheiten enthält.
Es wurden 4,766 g eines maleinierten COC erhalten mit einem Äquivalentgewicht von 1800 g/mol C = C, Äquivalentgewicht von 3500 g/mol Anhydrid, eta = 0,78 dl/g.

### Beispiel 10:

Es wurde gemäß Beispiel 8 verfahren, jedoch wurde Nitrobenzol durch 100 mg 2,6-Di-tert-butyl-4-methylphenol ersetzt. 3,52 g eines maleinierten COC wurden erhalten mit einem Äquivalentgewicht von 1180 g/mol C = C (JZ = 20,5), Äquivalentgewicht von 2400 g/mol Anhydrid, eta = 0,49 dl/g.

### Beispiel 11:

Beispiel 10 wurde im 10-fach größeren Maßstab wiederholt, jedoch mit einem anderen Ausgangspolymeren: eta = 0,34 dl/g, M_{w} = 37900 g/mol, M_{w}/Mₙ = 2,8; JZ = 15, d.h. ÄG = 1690 g/mol C = C, T_{g} = 153 °C, das 50 mol-% Ethylen-, 45 mol-% Norbornen- und 5 mol-% 5-Vinylnorbornen-Repetiereinheiten enthält.
Es wurden Ausbeuten > 90 % (w/w) erhalten.
eta = 0,45 dl/g; JZ = 21-22, d.h. ÄG = 1170-1230 g/mol C = C,
ÄG = 3000-4000 g/mol Anhydrid.

### Vergleichsbeispiel A:

Es wurde gemäß Beispiel 11 verfahren, jedoch wurden 21,2 g des COC zusammen mit 19,8 g (202 mmol) Maleinsäureanhydrid in 333 ml Toluol gelöst und 1,125 g (6,85 mmol, 3,4 mol-% bez. Doppelbindung) Azoisobutyronitril zugesetzt. Innerhalb von 80 min wurde bei 80 °C ein Gel erhalten.

### Beispiel 12:

Ein en-maleiniertes COC (aus Beispiel 11) wurde in Methylenchlorid gelöst (20 % w/v) und auf eine Glasoberfläche aufgerakelt. Nach Abdunsten des Lösungsmittels über Nacht wurde an dem erhaltenen Polymerfilm ein Kontaktwinkel von 85 ° (Wasser), 75 ° (Glycerin) und 66 ° (Glykol) gemessen (Randwinkelmeßgerät G1, Fa. Krüss, Hamburg).

### Vergleichsbeispiel B:

An einem Film, der unter den Bedingungen von Beispiel 12 aus dem unfunktionalisierten COC von Beispiel 2, hergestellt wurde, konnte ein Kontaktwinkel von 92 ° (Wasser), 78 ° (Glycerin) und 62 ° (Glykol) gemessen werden.

### Beispiel 13:

Der Polymerfilm aus Beispiel 9 wurde mit einer gesättigten Lösung des Farbstoffs 1,2-Diaminoanthrachinon in N-Methylpyrrolidon (NMP), das 1 % (v/v) Pyridin enthielt, behandelt. Innerhalb von 60 min wurde von Raumtemperatur auf 100 °C erwärmt. Der Film wurde mit kaltem NMP, heißem Wasser klargespült und zeigte eine deutliche Rotfärbung. Auch durch Einwirken von Dimethylformamid (DMF) bei Raumtemperatur ließ sich die Färbung nicht entfernen.

### Vergleichbeispiel C:

Die Polymerfolie aus Vergleichsbeispiel B wurde dem in Beispiel 13 beschriebenen Färbevorgang unterzogen. Die erhaltene schwache Rotfärbung konnte mit NMP restlos entfernt werden.

### Beispiel 14:

Das COC aus Beispiel 3 wurde als 0,5, 5 und 10 Gew.-%ige Lösung in Decalin angesetzt und über Nacht unter Rühren gelöst. Jeweils die Hälfte jeder erhaltenen Lösung wurde sorgfältig entgast und mit Stickstoff gesättigt. Die zweite Hälfte jeder Lösung wurde im ursprünglichen Zustand belassen. Nun wurden alle Lösungen in verschlossenen Glasgefäßen in einen Thermostaten mit 135 °C Ölbadtemperatur eingehängt und die Zeit bis zum ersten Auftreten von Gelteilchen beobachtet. Die hochkonzentrierte entgaste Lösung begann nach 3 Minuten zu gelieren. Die mittelkonzentrierte Lösung benötigte 8 Minuten, während die 0,5 %-ige Probe nach 13 Minuten Gelteilchen zeigte. Proben, die nicht entgast worden waren, zeigten eine 5 Minuten längere Zeitspanne bis zum Auftreten erster Gele.

## Patentansprüche

1. Cycloolefincopolymer mit einer Lösungsviskosität (eta) ≥ 0,25 dl/g, enthaltend
A) 10 bis 90 Gew.-%, bezogen auf die Gesamtmasse des Cycloolefincopolymers, polymerisierte Einheiten von Norbornen oder Tetracyclododecen,
B) 1 bis 50 Gew.-%, bezogen auf die Gesamtmasse des Cycloolefincopolymers, polymerisierte Einheiten mindestens eines cyclischen oder acyclischen Polyens mit 4 bis 20 C-Atomen, wobei die Doppelbindungen konjugiert und/oder nicht-konjugiert, endständig in einer Kette oder in einem Ring endo- oder exo-cyclisch sind, wobei die polymerisierten Einheiten mindestens 0,1 Gew.-%, bezogen auf die Gesamtmasse des Cycloolefincopolymers, eines acyclischen C₄-C₂₀-Polyens enthalten,
C) 0 bis 80 Gew.-%, bezogen auf die Gesamtmasse des Cycloolefincopolymers, polymerisierte Einheiten von Ethylen oder Propylen und
D) 0,05 bis 20 Gew.-%, bezogen auf die Gesamtmasse des Cycloolefincopolymers, polymerisierte Einheiten, welche mindestens zwei elektronenziehende Gruppen aufweisen,
wobei das Äquivalentgewicht bezüglich olefinischer Doppelbindungen gleich oder kleiner ist als das Zahlenmittel des Molekulargewichts und wobei das Cycloolefincopolymer in Abwesenheit von Radikalstartern hergestellt wird.

2. Verfahren zur Herstellung eines kontrolliert vernetzbaren, en-funktionalisierten Cycloolefincopolymers gemäß Anspruch 1 mit einer Lösungsviskosität (eta) ≥ 0,25 dl/g, wobei ein doppelbindungshaltiges Cycloolefincopolymer mit mindestens einem Enophil in Abwesenheit von Radikalstartem zur Reaktion gebracht wird.

3. Beschichtungsmittel, enthaltend mindestens ein Cycloolefincopolymer gemäß Anspruch 1.

4. Verwendung eines Cycloolefincopolymers, gemäß Anspruch 1, als Beschichtung oder Additiv.

## Claims

1. A cycloolefin copolymer having a solution viscosity (eta) ≥ 0.25 dl/g, comprising
A) from 10 to 90% by weight, based on the total mass of the cycloolefin copolymer, of polymerized units of norbornene or tetracyclododecene,
B) from 1 to 50% by weight, based on the total mass of the cycloolefin copolymer, of polymerized units of at least one cyclic or acyclic polyene having 4 to 20 carbon atoms, the double bonds being conjugated and/or nonconjugated and being situated terminally in a chain or endo- or exocyclically in a ring, the polymerized units including at least 0.1% by weight, based on the total mass of the cycloolefin copolymer, of an acyclic C₄-C₂₀ polyene,
C) from 0 to 80% by weight, based on the total mass of the cycloolefin copolymer, of polymerized units of ethylene or propylene, and
D) from 0.05 to 20% by weight, based on the total mass of the cycloolefin copolymer, of polymerized units which possess at least two electron-withdrawing groups,
the equivalent weight with regard to olefinic double bonds being less than or equal to the number-average molecular weight and the cycloolefin copolymer being prepared in the absence of free-radical initiators.

2. A process for the preparation of an ene-functionalized cycloolefin copolymer as claimed in claim 1 which can be crosslinked in a controlled manner and has a solution viscosity (eta) ≥ 0.25 dl/g, which comprises reacting a double-bond-containing cycloolefin copolymer with at least one enophile in the absence of free-radical initiators.

3. A coating composition comprising at least one cycloolefin copolymer as claimed in claim 1.

4. The use of a cycloolefin copolymer as claimed in claim 1 as a coating or additive.

## Revendications

1. Copolymère de cyclo-oléfine ayant une viscosité en solution (êta) ≥ 0,25 dl/g, renfermant
A) de 10 à 90% en poids, par rapport à la masse totale du copolymère de cyclo-oléfine de motifs polymérisés de norbornène ou de tétracyclododécène,
B) de 1 à 50% en poids, par rapport à la masse totale du copolymère de cyclo-oléfine, de motifs polymérisés d'au moins un polyène cyclique ou acyclique ayant de 4 à 20 atomes de carbone, les doubles liaisons étant conjuguées et/ou non conjuguées, à l'extrémité d'une chaîne, ou hexo- ou endocycliques dans un noyau, les motifs polymérisés renfermant au moins 0,1% en poids, par rapport à la masse totale du copolymère de cyclo-oléfine, d'un polyène en C₄-C₂₀ acyclique,
C) de 0 à 80% en poids, par rapport à la masse totale du copolymère de cyclo-oléfine, de motifs polymérisés d'éthylène ou de propylène, et
D) de 0,05 à 20% en poids, par rapport à la masse totale du copolymère de cyclo-oléfine, de motifs polymérisés renfermant au moins deux groupes électro-attracteurs,
le poids équivalent relatif aux doubles liaisons oléfiniques étant inférieur ou égal au poids moléculaire moyen en nombre et le copolymère de cyclo-oléfine étant préparé en l'absence d'amorceurs radicalaires.

2. Procédé de préparation d'un copolymère de cyclo-oléfine à fonctionnalisation ène et à réticulation régulée selon la revendication 1, ayant une viscosité en solution (êta) ≥ 0,25 dl/g, un copolymère de cyclo-oléfine renfermant des doubles liaisons étant mis à réagir avec au moins un énophile en l'absence d'amorceurs radicalaires.

3. Composition de revêtement contenant au moins un copolymère de cyclo-oléfine selon la revendication 1.

4. Utilisation d'un copolymère de cyclo-oléfine selon la revendication 1, en tant que revêtement ou additif.
